# EUROPEAN PATENT SPECIFICATION

(11) **EP 4 620 807 B1**
(45) Date of publication and mention of the grant of the patent: **18.11.2026**
(21) Application number: 24747304.4
(22) Date of filing: 23.01.2024
(51) Int. Cl.: G05D 1/654, G05D 1/686, G05D 1/46, B64C 13/18, B64C 27/04, B64U 10/10, B64U 70/00, B64U 80/84, G05D 107/00, G05D 109/10, G05D 111/10, B64F 1/00

(54) **AIRCRAFT POSITION CONTROL SYSTEM, AIRCRAFT, AND AIRCRAFT POSITION CONTROL METHOD**
FLUGZEUGPOSITIONSSTEUERUNGSSYSTEM, FLUGZEUG UND FLUGZEUGPOSITIONSSTEUERUNGSVERFAHREN
SYSTÈME DE COMMANDE DE POSITION D'AÉRONEF, AÉRONEF ET PROCÉDÉ DE COMMANDE DE POSITION D'AÉRONEF

(30) Priority: 23.01.2023 JP 2023008331
(43) Date of publication of application: 24.09.2025
(73) Proprietor: Mitsubishi Heavy Industries, Ltd., Tokyo 100-8332 (JP)
(72) Inventor: KOJIMA, Toru, Tokyo 100-8332 (JP)
(74) Representative: Hoffmann Eitle
(86) International application number: PCT/JP2024/001862
(87) International publication number: WO 2024/157977

(56) References cited:
- EP-A1- 4 227 216
- JP-A- 2022 078 702
- JP-A- 2022 078 702
- JP-A- H04 293 697
- JP-A- H09 188 299
- KR-B1- 102 231 574
- US-A1- 2015 286 220
- US-A1- 2015 286 220
- TOPCZEWSKI SEBASTIAN ET AL: "Helicopter Control During Landing on a Moving Confined Platform", IEEE ACCESS, IEEE, USA, vol. 8, 4 June 2020 (2020-06-04), pages 107315 - 107325, XP011793784, DOI: 10.1109/ACCESS.2020.3000294
- FENG YI ET AL: "Autonomous Landing of a UAV on a Moving Platform Using Model Predictive Control", DRONES, vol. 2, no. 4, 12 October 2018 (2018-10-12), XP093354158, ISSN: 2504-446X, DOI: 10.3390/drones2040034

## Description

### Technical Field

The present disclosure relates to an aircraft position control system, an aircraft, and an aircraft position control method, and particularly relates to position control of target point tracking hovering in which the position of an aircraft is made to track the movement of a target landing point caused by ship motion.

### Background Art

In the related art, a takeoff/landing control device for enabling an aircraft to take off from or land on a moving object such as a ship is known (for example, refer to PTL 1). The takeoff/landing control device of PTL 1 includes a hull motion prediction device that predicts a hull motion of a ship, a takeoff/landing state indication device that receives an output of the hull motion prediction device and calculates a takeoff/landing state of an aircraft on the ship, an instruction transmission device that transmits an output of the takeoff/landing state indication device, an instruction reception device that receives an output of the instruction transmission device, and a flight motion control device that receives an output of the instruction reception device and controls a flight motion. The hull motion prediction device, the takeoff/landing state indication device, and the instruction transmission device are provided in a ship, and the instruction reception device and the flight motion control device are provided in an aircraft. PTL 2 relates to an aircraft position control system, an aircraft, and a position control method for an aircraft, and more particularly to a target point tracking hovering position control that follows the position of an aircraft according to the movement of a target landing point due to shaking.
PTL 3 describes a control algorithm for a helicopter automatic approach and landing on a moving confined platform.
PTL 4 describes a new autonomous landing method that can be implemented on micro UAVs that require high-bandwidth feedback control loops for safe landing under various uncertainties and wind disturbances.

### Citation List

### Patent Literature

[PTL 1] Japanese Unexamined Patent Application Publication No. 4-71998
[PTL 2] JP 2022 078702 A
[PTL 3] "Helicopter Control During Landing on a Moving Confined Platform", TOPCZEWSKI SEBASTIAN, IEEE ACCESS, IEEE, USA, vol. 8, 4 June 2020
[PTL 4] "Autonomous Landing of a UAV on a Moving Platform Using Model Predictive Control", FENG YI, DRONES, vol. 2, no. 4, 12 October 2018

### Summary of Invention

### Technical Problem

PTL 1 relates to a technique for landing on a ship in a fixed-wing aircraft, but in a rotary-wing aircraft, a landing on a ship is performed as follows.

In a case where a rotary-wing aircraft lands on a ship in a situation where there is a severe ship motion, the rotary-wing aircraft hovers at a predetermined position without tracking the movement of the deck due to the ship motion, and lands on the ship when the ship motion is minimal. In this case, for example, it is possible to land on the ship only for about 10 seconds approximately every 5 minutes. It is necessary to make the rotary-wing aircraft land on the ship in such a short time. If the rotary-wing aircraft cannot land on the ship during such a short time, it is necessary to wait for the next time when the ship motion subsides. In this way, it is difficult to repeatedly take off and land the rotary-wing aircraft from and on the ship at any time, which is a limitation in operation.

Therefore, an object of the present disclosure is to provide an aircraft position control system, an aircraft, and an aircraft position control method with which it is possible to suitably make an aircraft track a target landing point even in a case where the target landing point is displaced due to ship motion.

### Solution to Problem

According to the present disclosure, there is provided an aircraft position control system that causes a position of the aircraft to track a movement of a target landing point caused by ship motion, the system includes a processing unit for deck displacement estimation that estimates a first deck displacement of the target landing point, based on an attitude-corrected acceleration obtained by correcting an acceleration of the aircraft and a relative position between the aircraft and the target landing point; a processing unit for deck displacement prediction that predicts a second deck displacement of the target landing point in a future, based on the estimated first deck displacement; a filter processing unit that performs filter processing on each of the first deck displacement and the second deck displacement predicted by the processing unit for deck displacement prediction; and a model predictive control unit that executes model predictive control such that the relative position becomes zero, based on the estimated first deck displacement after filter processing and the second deck displacement in the future after filter processing, and outputs a control amount for controlling flight of the aircraft.

An aircraft of the present disclosure includes the aircraft position control system; and a flight control unit that controls flight based on the control amount output from the position control system.

According to the present disclosure, there is provided an aircraft position control method for causing a position of the aircraft to track a movement of a target landing point caused by ship motion, the method includes a step of estimating a first deck displacement of the target landing point, based on an attitude-corrected acceleration obtained by correcting an acceleration of the aircraft and a relative position between the aircraft and the target landing point; a step of predicting a second deck displacement of the target landing point in a future, based on the estimated first deck displacement; a step of performing filter processing on each of the first deck displacement and the predicted second deck displacement; and a step of executing model predictive control such that the relative position becomes zero, based on the estimated first deck displacement and the second deck displacement in the future after filter processing, and outputting a control amount for controlling flight of the aircraft.

### Advantageous Effects of Invention

According to the present disclosure, even in a case where the target landing point is displaced due to ship motion, the aircraft can be suitably caused to track the movement of the target landing point caused by ship motion.

### Brief Description of Drawings

Fig. 1 is a schematic configuration diagram showing an example of an aircraft position control system according to Embodiment 1.
Fig. 2 is an explanatory view showing a state where an aircraft according to Embodiment 1 heads for a target landing point.
Fig. 3 is a view for describing an example of a marker provided at the target landing point.
Fig. 4 is a block diagram showing an example of deck displacement estimation processing, deck displacement prediction processing, filter processing, and model predictive control.
Fig. 5 is a graph related to position control with respect to the target landing point of the aircraft.
Fig. 6 is a block diagram showing an example of deck displacement estimation processing, deck displacement prediction processing, filter processing, and model predictive control of an aircraft position control system according to Embodiment 2. Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [Embodiment 1]

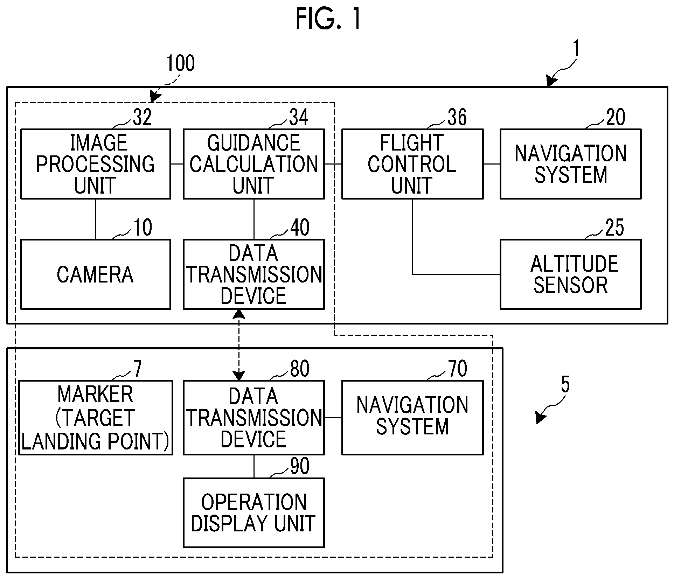

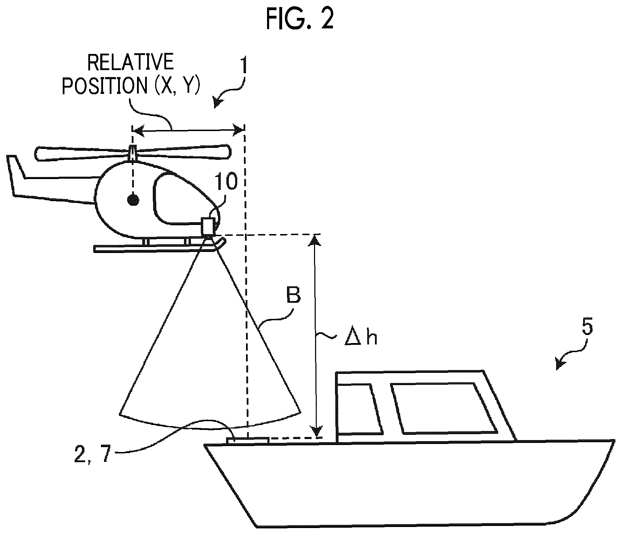

Fig. 1 is a schematic configuration diagram showing an example of an aircraft position control system according to Embodiment 1. Fig. 2 is an explanatory view showing a state where an aircraft according to Embodiment 1 heads for a target landing point.

As shown in Figs. 1 and 2, the aircraft 1 is a flying object (for example, a helicopter, a drone, or the like) as a rotary-wing aircraft. In the present embodiment, the aircraft 1 is an unmanned aircraft. The aircraft 1 may be any flying object capable of moving forward, moving rearward, moving laterally, turning, and hovering, and may be a manned aircraft. The aircraft 1 is equipped with a part of a position control system 100, and the flight is controlled by the position control system 100 to land on the target landing point 2 shown in Fig. 2.

### (Target Landing Point)

In Embodiment 1, as shown in Fig. 2, the target landing point 2 is provided on the ship 5. For this reason, the aircraft 1 lands on the ship 5 as a moving object moving on the water. Although not shown, the ship 5 is provided with a restraining device for restraining the aircraft 1 when the aircraft 1 lands on the target landing point 2. However, the target landing point 2 is not limited to the ship 5, and may be provided in a vehicle or the like as a moving object moving on the ground, or may be provided in a stationary facility or on the ground.

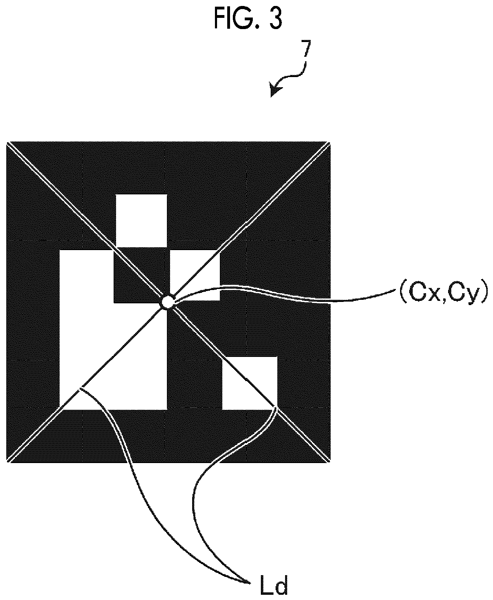

A marker 7 for the aircraft 1 to capture the position of the target landing point 2 is provided at the target landing point 2. Fig. 3 is a view for describing an example of the marker provided at the target landing point. As shown in the drawing, the marker 7 is, for example, an AR marker color-coded in two colors of black and white, and is a square-shaped marker. The marker 7 is not limited to the AR marker, and may be any marker that can capture the position of the target landing point 2 by image processing, and may be, for example, an H mark or an R mark indicating a landing point of a heliport. In addition, a plurality of markers 7 having different shapes may be provided on the ship 5, and the aircraft 1 may be guided to the target landing point 2 corresponding to any one of the different markers 7. In addition, in the present embodiment, the marker 7 is provided on the ship 5 in order to capture the position of the target landing point 2. However, the configuration is not particularly limited as long as the position of the target landing point 2 can be acquired.

### (Position Control System)

The aircraft position control system 100 according to the present embodiment is a system that controls the position of the aircraft 1 in order to land the aircraft 1 in flight on the target landing point 2. The position control system 100 is mounted on the aircraft 1 and the ship 5. As shown in Fig. 1, the aircraft 1 includes a camera 10, a navigation system 20, an altitude sensor 25, an image processing unit 32, a guidance calculation unit 34, a flight control unit 36, and a data transmission device 40. In addition, the ship 5 includes the marker 7, a navigation system 70, a data transmission device 80, and an operation display unit 90. Then, the position control system 100 has the camera 10, the image processing unit 32, the guidance calculation unit 34, and the data transmission device 40 in the aircraft 1, and has the marker 7, the navigation system 70, the data transmission device 80, and the operation display unit 90 in the ship 5.

### (Ship)

As shown in Fig. 1, the ship 5 includes the navigation system 70, the data transmission device 80, and the operation display unit 90. The navigation system 70 is, for example, an inertial navigation system (INS) and acquires attitude angles in a pitch direction and a roll direction, a ship heading, a speed, an acceleration, position coordinates in the earth coordinate system, and the like of the ship 5. In the present embodiment, the navigation system 70 is described as being applied to the inertial navigation system, but is not particularly limited, and any navigation system 70 may be used. In addition, in the present embodiment, the navigation system 70 is an inertial navigation system including a global positioning system (GPS) as a position measurement unit in order to improve the measurement accuracy of the position. In the present embodiment, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 70. In addition, the navigation system 70 may acquire at least a part of various types of data by a sensor. The data transmission device 80 is included in the position control system 100 and exchanges various signals with the data transmission device 40 mounted on the aircraft 1 through wireless communication. The operation display unit 90 is a user interface through which an operator on board the ship 5 grasps a control status and inputs various instructions. The instruction input in the operation display unit 90 is transmitted from the data transmission device 80 to the data transmission device 40. In addition, the control status of the aircraft 1 is transmitted from the data transmission device 40 to the data transmission device 80. That is, the data transmission device 40 and the data transmission device 80 can perform bidirectional communication.

### (Aircraft)

As shown in Figs. 1 and 2, the aircraft 1 includes a camera 10, a navigation system 20, an altitude sensor 25, an image processing unit 32, a guidance calculation unit 34, a flight control unit 36, and a data transmission device 40.

The camera 10 is an imaging device mounted on the aircraft 1 via a gimbal (not shown). The camera 10 may be a monocular camera, a stereo camera, an infrared camera, or the like, as long as the camera 10 can capture the marker 7. The camera 10 is provided to capture the marker 7 provided at the target landing point 2 from the aircraft 1. The camera 10 can adjust an imaging direction via a gimbal (not shown). In the present embodiment, the camera 10 is controlled such that an imaging range B (refer to Fig. 2) of the camera 10 faces directly below in a vertical direction as an example. The camera 10 is controlled such that the imaging range B faces an oblique front side with respect to the vertical direction. In addition, the camera 10 may also be provided without a gimbal and may be fixed directly below the aircraft of the aircraft 1 so that the imaging direction faces the lower side in the vertical direction.

The navigation system 20 is, for example, an inertial navigation system (INS), as in the navigation system 70. The navigation system 20 may be an inertial navigation system including a position measurement unit such as GPS, as in the navigation system 70, or may be an inertial navigation system excluding a position measurement unit such as GPS, and is not particularly limited.

The navigation system 20 including the GPS acquires attitude angles of the aircraft 1 in a roll direction, a yaw direction, and a pitch direction, an aircraft speed, an inertial speed, an aircraft acceleration, an aircraft heading, position coordinates in an earth coordinate system, and the like of the aircraft 1. The navigation system 20 may have an attitude angle sensor that detects the attitude angle of the aircraft 1, a speed sensor that detects an aircraft speed of the aircraft 1, an acceleration sensor that detects the aircraft acceleration of the aircraft 1, and a sensor that detects an aircraft heading of the aircraft 1. The navigation system 20 outputs the acquired attitude angle, the aircraft speed, the inertial speed, the aircraft acceleration, the aircraft heading, and the position coordinates of the aircraft 1 to the flight control unit 36.

In addition, as shown in Fig. 1, the position control system 100 includes an altitude sensor 25 that detects an altitude of the aircraft 1 from a ground surface or a water surface. The altitude sensor 25 is, for example, a laser altimeter, and measures a relative altitude Δh (refer to Fig. 2) from the aircraft 1 to the target landing point 2. As the altitude sensor 25, a radio altimeter, a barometric altimeter, or any altimeter may be used. In addition, the altimeters may be appropriately combined and applied to measure an altitude from a ground surface or an altitude from a sea surface according to a use environment. The altitude sensor 25 outputs the detected relative altitude Δh of the aircraft 1 to the flight control unit 36. The altitude sensor 25 may measure the altitude of the aircraft 1 and output the altitude to the flight control unit 36, and calculate the relative altitude Δh to the target landing point 2 based on the altitude of the aircraft 1 in the guidance calculation unit 34 (to be described later). In addition, the position control system 100 may not be limited to the altitude sensor 25, and may calculate the relative altitude Δh between the aircraft 1 and the ship 5 by performing image processing on an image including the marker 7 captured by the camera 10 in an image processing unit 32 which will be described later.

The image processing unit 32 performs image processing on the image captured by the camera 10 to calculate the center (Cx, Cy) (refer to Fig. 3) of the marker 7, that is, the target landing point 2. The center (Cx, Cy) here is a coordinate point in a camera fixed coordinate system in which the center of the image captured by the camera 10 is the origin, and can be calculated by the number of pixels from the center of the image. Specifically, as shown in Fig. 3, the image processing unit 32 specifies two diagonal lines Ld extending between corner portions of the marker 7 through image processing, and sets an intersection of the two specified diagonal lines Ld as the center (Cx, Cy) of the marker 7. The target landing point 2 is not limited to the center (Cx, Cy) of the marker 7, and may be any of the four corners of the marker 7 or a position offset from the center of the marker 7. The image processing unit 32 outputs the calculated center (Cx, Cy) of the marker 7 to the guidance calculation unit 34.

In addition, the image processing unit 32 may specify a direction of the marker 7 by performing image processing on the image including the marker 7 captured by the camera 10, and may calculate the ship heading of the ship 5 by associating the direction of the marker 7 with the aircraft heading of the aircraft 1 acquired by the navigation system 20. Further, as described above, the image processing unit 32 may calculate the relative altitude Δh between the aircraft 1 and the ship 5 by performing image processing on the image including the marker 7 captured by the camera 10.

The guidance calculation unit 34 calculates the control amount of the aircraft 1 for guiding the aircraft 1 to the target landing point 2. The control amount is a control amount for adjusting the aircraft speed, the attitude angle, the change rate of the attitude angle, and the like of the aircraft 1. The guidance calculation unit 34 calculates a relative coordinate position between the aircraft 1 and the target landing point 2 in order to calculate the control amount. Specifically, the guidance calculation unit 34 calculates the relative position (X, Y) between the aircraft 1 and the target landing point 2 and the relative altitude Δh between the aircraft 1 and the target landing point 2 as the relative coordinate position. In addition, the guidance calculation unit 34 calculates the relative speed or the like between the aircraft 1 and the target landing point 2. The relative position (X, Y) is a distance between the aircraft 1 and the target landing point 2 in the horizontal direction. The relative altitude Δh is a distance between the aircraft 1 and the target landing point 2 in the vertical direction.

The guidance calculation unit 34 calculates the relative position (X, Y) between the aircraft 1 and the target landing point 2 based on the center (Cx, Cy) of the marker 7 calculated by the image processing unit 32, the heading of the camera 10, that is, the aircraft heading of the aircraft 1, and the altitude of the aircraft 1 (the relative altitude Δh with respect to the target landing point 2). In the present embodiment, the heading of the camera 10 is made to coincide with the aircraft heading of the aircraft 1. However, the present disclosure is not particularly limited thereto, and the heading of the camera 10 may not coincide with the aircraft heading of the aircraft 1. In this way, the image processing unit 32 and the guidance calculation unit 34 acquire the relative position between the aircraft 1 and the target landing point 2.

In addition, the guidance calculation unit 34 calculates the relative altitude Δh to the target landing point 2 based on the altitude of the aircraft 1 detected by the altitude sensor 25. Therefore, the altitude sensor 25 and the guidance calculation unit 34 acquire the relative altitude Δh between the aircraft 1 and the target landing point 2. In the image processing unit 32, the relative altitude Δh between the aircraft 1 and the ship 5 may be calculated by performing image processing on the image including the marker 7 captured by the camera 10.

In addition, the guidance calculation unit 34 calculates a relative speed between the aircraft 1 and the target landing point 2. Therefore, the guidance calculation unit 34 acquires the relative speed between the aircraft 1 and the target landing point 2. More specifically, the guidance calculation unit 34 executes relative speed estimation processing of calculating a relative speed (ΔVx, ΔVy) between the aircraft 1 and the target landing point 2 based on the relative position (X, Y) and the aircraft speed (Vx, Vy). Therefore, the guidance calculation unit 34 acquires the relative speed (ΔVx, ΔVy) between the aircraft 1 and the target landing point 2.

Then, the guidance calculation unit 34 calculates the control amount C' by model predictive control based on future prediction, based on the relative position (X, Y), the relative altitude Δh, the relative speed (ΔVx, ΔVy), and the aircraft acceleration. The guidance calculation unit 34 outputs the calculated control amount C' to the flight control unit 36.

The flight control unit 36 controls each component of the aircraft 1 to fly the aircraft 1 in accordance with the control amount calculated by the guidance calculation unit 34. The flight control unit 36 controls a blade pitch angle, the rotation speed, and the like of each rotor blade according to the control amount, and adjusts the aircraft speed, the attitude angle, the change rate of the attitude angle, and the like of the aircraft 1. Accordingly, the aircraft 1 is guided to the target landing point 2. In the present embodiment, the image processing unit 32 and the guidance calculation unit 34 are described as separate functional units from the flight control unit 36. However, the flight control unit 36, the image processing unit 32, and the guidance calculation unit 34 may be integrated into one functional unit. That is, the flight control unit 36 may perform the processing of the image processing unit 32 and the guidance calculation unit 34.

The data transmission device 40 exchanges various signals with the data transmission device 80 mounted on the ship 5 through wireless communication.

### (Position Control of Aircraft)

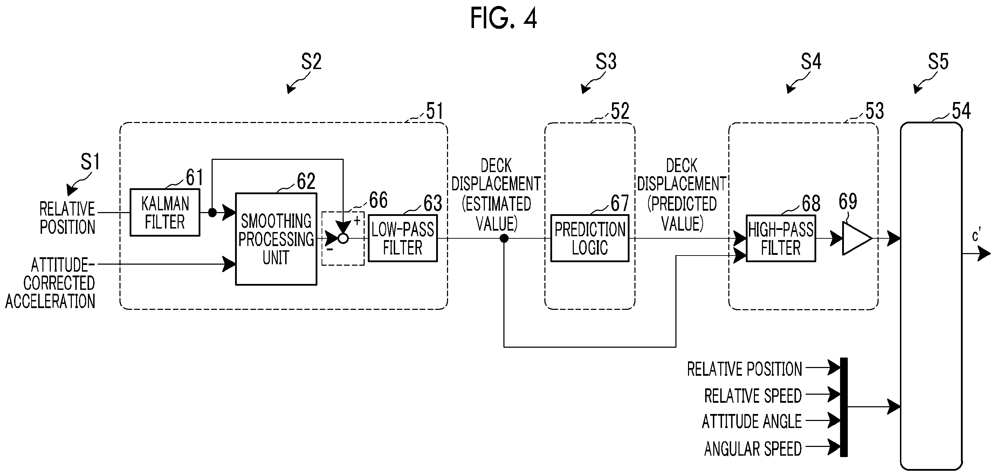

Next, the position control of the aircraft 1 according to the present embodiment will be described with reference to Fig. 4. Fig. 4 is a block diagram showing an example of deck displacement estimation processing, deck displacement prediction processing, filter processing, and model predictive control. In the position control of the aircraft 1, the guidance calculation unit 34 performs the position control related to the target point tracking hovering in which the position of the aircraft 1 is made to track the movement of a target landing point 2 caused by ship motion, based on the block diagram shown in Fig. 4. For this reason, the guidance calculation unit 34 calculates the control amount C' of the aircraft 1 for performing the target point tracking hovering.

As shown in Fig. 4, the guidance calculation unit 34 includes a processing unit 51 for deck displacement estimation, a processing unit 52 for deck displacement prediction, a filter processing unit 53, and a model predictive control unit 54.

The processing unit 51 for deck displacement estimation performs processing for estimating the deck displacement (first deck displacement) of the target landing point 2 that changes due to ship motion. The processing unit 51 for deck displacement estimation estimates the deck displacement based on the attitude-corrected acceleration and the relative position (X, Y). The processing unit 51 for deck displacement estimation includes a Kalman filter 61, a smoothing processing unit 62, a low-pass filter 63, and a subtraction circuit unit 66.

The Kalman filter 61 performs estimation based on the relative position (X, Y) and outputs the estimated relative position (X, Y) after estimation. Specifically, the relative position (X, Y) calculated by the guidance calculation unit 34 is input to the Kalman filter 61. When the relative position (X, Y) is input, the Kalman filter 61 estimates a change over time in the relative position (X, Y) to calculate the estimated relative position (X, Y). The Kalman filter 61 outputs the calculated estimated relative position (X, Y) to the smoothing processing unit 62 and the subtraction circuit unit 66.

The smoothing processing unit 62 performs processing for calculating the smoothed relative position, which is an average relative position, even in a case where the target landing point 2 changes due to ship motion. The smoothing processing unit 62 outputs the smoothed relative position (X, Y) obtained by smoothing the estimated relative position (X, Y) based on the attitude-corrected acceleration and the estimated relative position (X, Y). Specifically, the attitude-corrected acceleration is input to the smoothing processing unit 62, and the estimated relative position (X, Y) calculated by the Kalman filter 61 is input. The attitude-corrected acceleration is obtained by correcting the acceleration of the aircraft 1 based on the acceleration of the aircraft 1 and the attitude of the aircraft 1 acquired by the navigation system 20. When the attitude-corrected acceleration and the estimated relative position (X, Y) are input, the smoothing processing unit 62 calculates the smoothed relative position (X, Y). Then, the smoothing processing unit 62 outputs the calculated smoothed relative position (X, Y) to the subtraction circuit unit 66.

The subtraction circuit unit 66 outputs the deck displacement based on the estimated relative position (X, Y) and the smoothed relative position (X, Y). Specifically, the subtraction circuit unit 66 obtains a difference between the estimated relative position (X, Y) and the smoothed relative position (X, Y), and calculates the difference as the deck displacement. Then, the subtraction circuit unit 66 outputs the calculated deck displacement to the low-pass filter 63.

The low-pass filter 63 is a filter that attenuates a frequency equal to or higher than a predetermined cutoff frequency with respect to the deck displacement input from the subtraction circuit unit 66. The low-pass filter 63 removes a high-frequency component of the deck displacement and outputs a low-frequency component provided in the deck displacement to the processing unit 52 for deck displacement prediction and the model predictive control unit 54.

The processing unit 52 for deck displacement prediction predicts a future deck displacement based on the deck displacement output from the processing unit 51 for deck displacement estimation. The processing unit 52 for deck displacement prediction uses a prediction logic 67 to process the input deck displacement using the prediction logic 67 to calculate the deck displacement as a predicted value. The processing unit 52 for deck displacement prediction outputs the calculated deck displacement as a predicted value to the filter processing unit 53.

The filter processing unit 53 performs filter processing on the deck displacement (second deck displacement) output from the processing unit 52 for deck displacement prediction such that the relative position (X, Y) between the aircraft 1 and the target landing point 2 becomes zero. The filter processing unit 53 includes a high-pass filter 68 and a gain 69. The filter processing unit 53 includes a high-pass filter 68 and a gain 69 for the first deck displacement, and a high-pass filter 68 and a gain 69 for the second deck displacement. The high-pass filter 68 and the gain 69 may be common to the first deck displacement and the second deck displacement.

The high-pass filter 68 is a filter that attenuates a frequency equal to or lower than a predetermined cutoff frequency at a predetermined time constant for each of the deck displacement input from the processing unit 51 for deck displacement estimation and the deck displacement input from the processing unit 52 for deck displacement prediction. The high-pass filter 68 removes the low-frequency component of the deck displacement and outputs the high-frequency component included in the deck displacement to the gain 69.

The gain 69 is a filter that multiplies a predetermined sensitivity coefficient by the deck displacement input from the high-pass filter 68. The gain 69 outputs the deck displacement multiplied by a predetermined sensitivity coefficient to the model predictive control unit 54.

The model predictive control unit 54 calculates the control amount C' by executing model predictive control (MPC) based on the deck displacement. As the deck displacement, the model predictive control unit 54 receives the deck displacement that is the estimated value subjected to the filter processing by the filter processing unit 53 and the deck displacement that is the predicted value calculated by the processing unit 52 for deck displacement prediction and subjected to the filter processing by the filter processing unit 53. The model predictive control unit 54 executes model predictive control based on the deck displacement as an estimated value and the deck displacement as a predicted value to calculate the control amount C'. Then, the model predictive control unit 54 outputs the calculated control amount C' to the flight control unit 36. More specifically, the model predictive control unit 54 calculates and sets a target value including a target relative position and a target relative speed by giving the deck displacement as the predicted value to the target deck displacement, based on the deck displacement as the estimated value and the deck displacement as the predicted value. In addition, an estimated value including the relative position and the relative speed calculated by using a simple model of the aircraft 1 set in advance is input to the model predictive control unit 54. Specifically, the estimated value input to the model predictive control unit 54 is calculated using a simple model of the aircraft 1, based on weighted input parameters, in which weighting is performed for each of input parameters including the relative position between the aircraft 1 and the target landing point 2, the relative speed between the aircraft 1 and the target landing point 2, the attitude angle of the aircraft 1, and the angular speed of the attitude angle. The model predictive control unit 54 calculates the control amount C' such that the estimated value including the relative position and the relative speed becomes the target value including the relative position and the relative speed.

The flight control unit 36 executes flight control based on the control amount C'. As an example of the flight control by the flight control unit 36, in a case where the aircraft 1 is a helicopter, target point tracking hovering, in which the helicopter tracks the target landing point 2 so that the relative position with respect to the target landing point 2 becomes zero, is executed by performing the flight control through tilting the main rotor of the helicopter in the longitudinal direction and the lateral direction.

### (Aircraft Position Control Method)

Next, a position control method using the position control system 100 of the aircraft 1 according to Embodiment 1 will be described with reference to Fig. 4. Hereinafter, a position control method in a case where the aircraft 1 is a helicopter will be described.

In the position control method for the aircraft 1, first, the relative position (X, Y) is acquired, and the attitude-corrected acceleration is acquired based on the acceleration of the aircraft 1 and the attitude of the aircraft 1 (step S1). In step S1, since there is the position control with respect to the relative position (X, Y), the attitude-corrected acceleration in the longitudinal direction and the lateral direction of the main rotor of the helicopter is acquired.

Subsequently, in the position control method for the aircraft 1, the processing unit 51 for deck displacement estimation calculates and outputs the deck displacement as an estimated value based on the attitude-corrected acceleration and the relative position (X, Y) (step S2). In step S2, a difference between the estimated relative position (X, Y) and the smoothed relative position (X, Y) is obtained, and the difference is calculated as the deck displacement.

Thereafter, in the position control method of the aircraft 1, the processing unit 52 for deck displacement prediction calculates and outputs the deck displacement as a predicted value based on the deck displacement as an estimated value using the prediction logic 67 (step S3).

Subsequently, in the position control method for the aircraft 1, after the execution of step S3, the filter processing is performed in the filter processing unit 53 on the deck displacement as the output predicted value and the deck displacement as the estimated value output in step S2 and outputs the result (step S4).

Then, in the position control method for the aircraft 1, after the execution of step S4, model predictive control is executed based on a value obtained by performing the filter processing on the deck displacement as the estimated value output in step S2 and the deck displacement as the predicted value output in step S3, and the control amount C' is calculated and output to the flight control unit 36 (step S5).

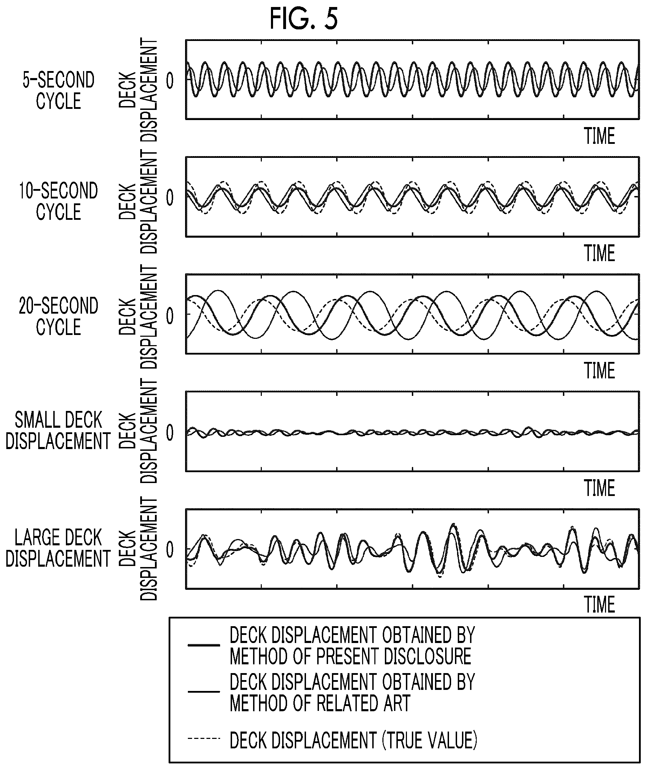

Next, the position control of the aircraft 1 with respect to the target landing point 2 will be described with reference to Fig. 5. Fig. 5 is a graph related to the position control with respect to the target landing point of the aircraft. In Fig. 5, the horizontal axis represents time and the vertical axis represents the deck displacement. Fig. 5 shows the true deck displacement of the ship 5 (target landing point 2), the deck displacement calculated by the method in the related art, and the deck displacement calculated by the method of the present disclosure. As a method in the related art, for example, feedback control (for example, PID control) is used.

Fig. 5 shows a case where the deck displacement varies with a 5-second cycle, a 10-second cycle, and a 20-second cycle in order from the top, and also shows a case where the deck displacement changes slightly and a case where the deck displacement changes greatly. In Fig. 5, in a case where the deck displacement has a 10-second cycle, the deck displacement obtained by the method of the related art and the deck displacement obtained by the method of the present disclosure are almost identical to the true deck displacement. On the other hand, in a case where the deck displacement has a 5-second cycle, in a case where the deck displacement has a 20-second cycle, in a case where the deck displacement changes slightly, and in a case where the deck displacement changes greatly, the deck displacement obtained by the method of the related art is significantly more delayed with respect to the true deck displacement than the deck displacement obtained by the method of the present disclosure. In other words, it has been confirmed that, with respect to the true deck displacement, the deck displacement obtained by the method of the present disclosure has a smaller delay than the deck displacement obtained by the method of the related art.

### [Embodiment 2]

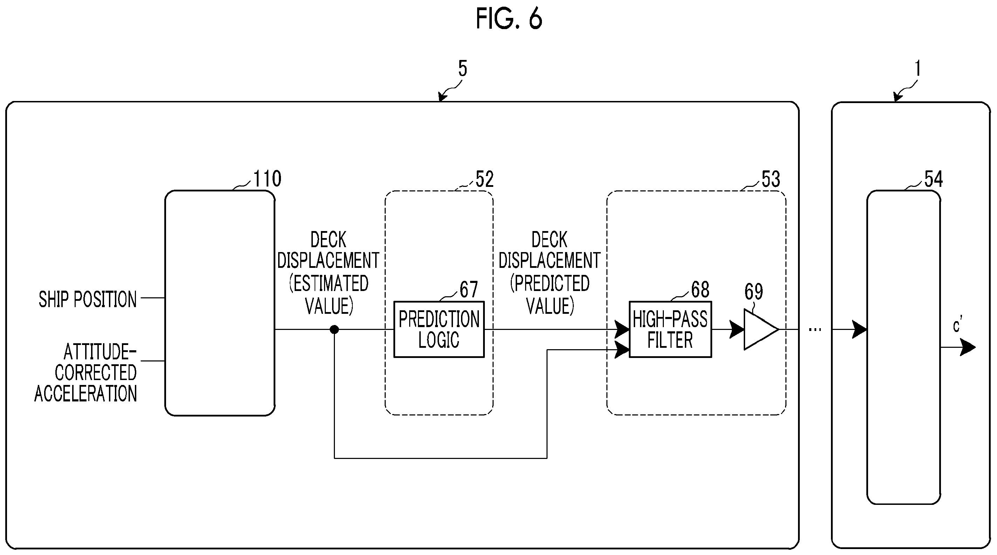

Next, Embodiment 2 will be described with reference to Fig. 6. Note that, in Embodiment 2, in order to avoid duplicate descriptions, portions that are different from those in Embodiment 1 will be described, and portions having the same configuration as those in Embodiment 1 will be denoted with the same reference numerals for description. Fig. 6 is a block diagram showing an example of deck displacement estimation processing, deck displacement prediction processing, filter processing, and model predictive control of an aircraft position control system according to Embodiment 2.

In the position control system 100 of Embodiment 2, the processing unit 110 for deck displacement estimation, the processing unit 52 for deck displacement prediction, and the filter processing unit 53 are provided on the ship 5 side, and the model predictive control unit 54 is provided on the aircraft 1 side. Then, the position control system 100 uploads the calculated deck displacement on the ship 5 side from the data transmission device 80 of the ship 5 to the model predictive control unit 54 via the data transmission device 40 of the aircraft 1.

The processing unit 110 for deck displacement estimation performs processing for estimating the deck displacement of the target landing point 2, which is changed due to ship motion. The processing unit 110 for deck displacement estimation estimates the deck displacement based on the attitude-corrected acceleration of the ship 5 and the position of the ship 5 (center (Cx, Cy) of the target landing point 2). The processing unit 110 for deck displacement estimation outputs the deck displacement as an estimated value to the processing unit 52 for deck displacement prediction and outputs the deck displacement to the filter processing unit 53. The processing unit 52 for deck displacement prediction and the filter processing unit 53 are the same as those in Embodiment 1, and thus, description thereof will be omitted.

On the ship 5 side, the deck displacement as an estimated value calculated in the processing unit 110 for deck displacement estimation and subjected to filter processing by the filter processing unit 53, and the deck displacement as a predicted value calculated in the processing unit 52 for deck displacement prediction and subjected to filter processing by the filter processing unit 53, are uploaded from the data transmission device 80 of the ship 5 to the aircraft 1. On the aircraft 1 side, when the data transmission device 40 acquires the deck displacement as an estimated value and the deck displacement as a predicted value, the data transmission device 40 outputs the deck displacements to the model predictive control unit 54. The model predictive control unit 54 executes model predictive control based on the deck displacement as an estimated value and the deck displacement as a predicted value to calculate the control amount C' and outputs the control amount C' to the flight control unit 36.

As described above, the aircraft position control system, the aircraft, and the aircraft position control method according to Embodiments 1 and 2 are understood as follows, for example.

A position control system 100 for an aircraft 1 according to a first aspect is an aircraft position control system that causes a position of the aircraft to track a movement of a target landing point 2 caused by ship motion, the system includes a processing unit 51 for deck displacement estimation that estimates a first deck displacement of the target landing point 2, based on an attitude-corrected acceleration obtained by correcting an acceleration of the aircraft 1 and a relative position between the aircraft 1 and the target landing point 2; a processing unit 52 for deck displacement prediction that predicts a second deck displacement of the target landing point 2 in a future, based on the estimated first deck displacement; a filter processing unit 53 that performs filter processing on each of the first deck displacement estimated by the processing unit 51 for deck displacement estimation and the second deck displacement predicted by the processing unit 52 for deck displacement prediction; and a model predictive control unit 54 that executes model predictive control such that the relative position becomes zero, based on the estimated first deck displacement after filter processing and the second deck displacement in the future after filter processing, and outputs a control amount C' for controlling flight of the aircraft 1.

According to this configuration, by executing the model predictive control based on the estimated deck displacement and the predicted deck displacement, the deck displacement can be accurately grasped, the control amount C' corresponding to the deck displacement can be accurately calculated, and the relative position can be brought close to zero. Therefore, even in a case where the target landing point is displaced due to ship motion, the aircraft can be suitably caused to track the target landing point. At this time, by subjecting the predicted deck displacement to filter processing, the convergence characteristic of the deck displacement can be improved, thereby allowing the aircraft to stably track the target landing point.

A second aspect provides the position control system 100 of the aircraft 1 according to the first aspect, the filter processing unit 53 includes a high-pass filter 68 having a predetermined time constant into which the first deck displacement is input, a gain 69 into which the first deck displacement output from the high-pass filter 68 is input, a high-pass filter 68 having a predetermined time constant into which the second deck displacement is input, and a gain 69 into which the second deck displacement output from the high-pass filter 68 is input.

According to this configuration, the convergence characteristic of the deck displacement can be further improved by a simple configuration using the high-pass filter 68 and the gain 69.

A third aspect provides the position control system 100 of the aircraft 1 according to the first or second aspect, the model predictive control unit 54 calculates a target value based on the first deck displacement and the second deck displacement, calculates an estimated value based on the relative position, a relative speed between the aircraft and the target landing point, an attitude angle of the aircraft, and an angular speed of the attitude angle, and calculates the control amount C' such that the estimated value is the target value.

According to this configuration, the control amount C' corresponding to the flight operation of the aircraft 1 can be accurately calculated.

The aircraft 1 according to a fourth aspect includes the position control system 100 of the aircraft 1 described above, and the flight control unit 36 that controls flight based on the control amount C' output from the position control system 100.

According to this configuration, the flight of the aircraft 1 can be controlled so as to appropriately track the target landing point 2 that is displaced due to ship motion.

A position control method for an aircraft 1 according to a fifth aspect is a position control method for an aircraft 1 for causing a position of the aircraft 1 to track a movement of a target landing point 2 caused by ship motion, the method includes a step S2 of estimating a first deck displacement of the target landing point 2, based on an attitude-corrected acceleration obtained by correcting an acceleration of the aircraft 1 and a relative position between the aircraft 1 and the target landing point 2; a step S3 of predicting a second deck displacement of the target landing point 2 in a future, based on the estimated first deck displacement; a step S4 of performing filter processing on each of the first deck displacement and the predicted second deck displacement; and a step S5 of executing model predictive control such that the relative position becomes zero, based on the estimated first deck displacement and the second deck displacement in the future after filter processing, and outputting a control amount C' for controlling flight of the aircraft 1.

According to this configuration, by executing the model predictive control based on the estimated deck displacement and the predicted deck displacement, the deck displacement can be accurately grasped, the control amount C' corresponding to the deck displacement can be accurately calculated, and the relative position can be brought close to zero. Therefore, even in a case where the target landing point is displaced due to ship motion, the aircraft can be suitably caused to track the target landing point. At this time, by subjecting the predicted deck displacement to filter processing, the convergence characteristic of the deck displacement can be improved, thereby allowing the aircraft to stably track the target landing point.

In addition, in the present embodiment, the relative position in the horizontal plane direction, that is, the deck displacement in the XY plane is set as a processing target, but the present invention is not limited thereto. The position control system may also set a deck displacement of a relative position in a three-dimensional space including a Z direction (direction of a distance Δh) orthogonal to the XY plane as a processing target in addition to the horizontal direction. In addition, the deck displacements in the XZ plane and the YZ plane may be set as processing targets based on the relative positions of the XZ plane and the YZ plane. The position control system may process the deck displacement based on the relative position for each of the X-axis, the Y-axis, and the Z-axis. By performing the above processing, the position control system can also evaluate the deck displacement in the vertical direction and can increase the accuracy of position control.

### Reference Signs List

1: aircraft
2: target landing point
5: ship
7: marker
10: camera
20: navigation system
32: image processing unit
34: guidance calculation unit
36: flight control unit
40: data transmission device
51: processing unit for deck displacement estimation
52: processing unit for deck displacement prediction
53: filter processing unit
54: model predictive control unit
61: Kalman filter
62: smoothing processing unit
63: low-pass filter
66: subtraction circuit unit
68: high-pass filter
69: gain
70: navigation system
80: data transmission device
90: operation display unit
100: position control system

## Claims

1. An aircraft position control system that causes a position of the aircraft (1) to track a movement of a target landing point (2) caused by ship motion, the system comprising:
a processing unit for deck displacement estimation (51) adapted to estimate a first deck displacement of the target landing point (2), based on an attitude-corrected acceleration obtained by correcting an acceleration of the aircraft (1) and a relative position between the aircraft (1) and the target landing point (2);
a processing unit for deck displacement prediction (52) adapted to predict a second deck displacement of the target landing point (2), based on the estimated first deck displacement;
a filter processing unit (53) adapted to perform filter processing on each of the first deck displacement and the second deck displacement predicted by the processing unit for deck displacement prediction (52); and
a model predictive control unit (54) adapted to execute model predictive control such that the relative position is substantially zero, based on the estimated first deck displacement after filter processing and the second deck displacement in the future after filter processing, and output a control amount for controlling flight of the aircraft (1),
wherein the model predictive control unit (54) is adapted to:
calculate a target value regarding the relative position based on the first deck displacement and the second deck displacement,
calculate an estimated value regarding the relative position based on the relative position, a relative speed between the aircraft (1) and the target landing point (2), an attitude angle of the aircraft (1), and an angular speed of the attitude angle, and
calculate the control amount such that the estimated value is the target value.

2. The aircraft position control system according to claim 1,
wherein the filter processing unit (53) includes
a high-pass filter (68) having a predetermined time constant into which the first deck displacement is input,
a gain (69) into which the first deck displacement output from the high-pass filter (68) is input,
a high-pass filter (68) having a predetermined time constant into which the second deck displacement is input, and
a gain (69) into which the second deck displacement output from the high-pass filter (68) is input.

3. An aircraft (1) comprising:
the aircraft position control system according to claim 1 or 2; and
a flight control unit (36) adapted to control flight based on the control amount output from the position control system (100).

4. An aircraft position control method for causing a position of the aircraft (1) to track a movement of a target landing point (2) caused by ship motion, the method comprising:
a step of estimating a first deck displacement of the target landing point (2), based on an attitude-corrected acceleration obtained by correcting an acceleration of the aircraft (1) and a relative position between the aircraft (1) and the target landing point (2);
a step of predicting a second deck displacement of the target landing point (2), based on the estimated first deck displacement;
a step of performing filter processing on each of the first deck displacement and the predicted second deck displacement; and
a step of executing model predictive control such that the relative position is substantially zero, based on the estimated first deck displacement and the second deck displacement in the future after filter processing, and outputting a control amount for controlling flight of the aircraft (1),
wherein, in the step of executing model predictive control,
calculating a target value regarding the relative position based on the first deck displacement and the second deck displacement,
calculating an estimated value regarding the relative position based on the relative position, a relative speed between the aircraft (1) and the target landing point (2), an attitude angle of the aircraft (1), and an angular speed of the attitude angle, and
calculating the control amount such that the estimated value is the target value.

## Patentansprüche

1. Flugzeugpositionssteuerungssystem, das bewirkt, dass eine Flugzeugposition (1) einer durch Schiffsbewegung bewirkten Bewegung eines Ziellandepunkts (2) folgt, wobei das System Folgendes umfasst:
eine Verarbeitungseinheit zur Schätzung der Deckverschiebung (51), die dazu ausgelegt ist, eine erste Deckverschiebung des Ziellandepunkts (2) auf Grundlage einer fluglagekorrigierten Beschleunigung, die durch Korrigieren einer Beschleunigung des Flugzeugs (1) und einer Relativposition zwischen dem Flugzeug (1) und dem Ziellandepunkt (2) erhalten wird, zu schätzen;
eine Verarbeitungseinheit zur Vorhersage der Deckverschiebung (52), die dazu ausgelegt ist, eine zweite Deckverschiebung des Ziellandepunkts (2) auf Grundlage der geschätzten ersten Deckverschiebung vorherzusagen;
eine Filterverarbeitungseinheit (53), die dazu ausgelegt ist, eine Filterverarbeitung an jeder der ersten Deckverschiebung und der von der Verarbeitungseinheit zur Vorhersage der Deckverschiebung (52) vorhergesagten zweiten Deckverschiebung durchzuführen; und
eine modellprädiktive Regelungseinheit (54), die dazu ausgelegt ist, eine modellprädiktive Regelung derart auszuführen, dass die Relativposition im Wesentlichen null ist, auf Grundlage der geschätzten ersten Deckverschiebung nach der Filterverarbeitung und der zweiten Deckverschiebung in der Zukunft nach der Filterverarbeitung, und eine Stellgröße zum Steuern des Flugs des Flugzeugs (1) auszugeben,
wobei die modellprädiktive Regelungseinheit (54) dazu ausgelegt ist:
einen Sollwert bezüglich der Relativposition auf Grundlage der ersten Deckverschiebung und der zweiten Deckverschiebung zu berechnen,
einen Schätzwert bezüglich der Relativposition auf Grundlage der Relativposition, einer Relativgeschwindigkeit zwischen dem Flugzeug (1) und dem Ziellandepunkt (2), eines Fluglagewinkels des Flugzeugs (1) und einer Winkelgeschwindigkeit des Fluglagewinkels zu berechnen, und
die Stellgröße derart zu berechnen, dass der Schätzwert der Sollwert ist.

2. Flugzeugpositionssteuerungssystem nach Anspruch 1,
wobei die Filterverarbeitungseinheit (53) Folgendes einschließt
einen Hochpassfilter (68) mit einer vorbestimmten Zeitkonstante, in den die erste Deckverschiebung eingegeben wird,
eine Verstärkung (69), in die die aus dem Hochpassfilter (68) ausgegebene erste Deckverschiebung eingegeben wird,
einen Hochpassfilter (68) mit einer vorbestimmten Zeitkonstante, in den die zweite Deckverschiebung eingegeben wird, und
eine Verstärkung (69), in die die aus dem Hochpassfilter (68) ausgegebene zweite Deckverschiebung eingegeben wird.

3. Flugzeug (1), umfassend:
das Flugzeugpositionssteuerungssystem nach Anspruch 1 oder 2; und
eine Flugsteuereinheit (36), die dazu angepasst ist, den Flug auf Grundlage der aus dem Positionssteuerungssystem (100) ausgegebenen Stellgröße zu steuern.

4. Flugzeugpositionssteuerungsverfahren zum Bewirken, dass eine Flugzeugposition (1) einer durch Schiffsbewegung bewirkten Bewegung eines Ziellandepunkts (2) folgt, wobei das Verfahren Folgendes umfasst:
einen Schritt des Schätzens einer ersten Deckverschiebung des Ziellandepunkts (2) auf Grundlage einer fluglagekorrigierten Beschleunigung, die durch Korrigieren einer Beschleunigung des Flugzeugs (1) und einer Relativposition zwischen dem Flugzeug (1) und dem Ziellandepunkt (2) erhalten wird;
einen Schritt des Vorhersagens einer zweiten Deckverschiebung des Ziellandepunkts (2) auf Grundlage der geschätzten ersten Deckverschiebung;
einen Schritt des Durchführens einer Filterverarbeitung an jeder der ersten Deckverschiebung und der vorhergesagten zweiten Deckverschiebung; und
einen Schritt des Ausführens einer modellprädiktiven Regelung derart, dass die Relativposition im Wesentlichen null ist, auf Grundlage der geschätzten ersten Deckverschiebung und der zweiten Deckverschiebung in der Zukunft nach der Filterverarbeitung, und des Ausgebens einer Stellgröße zum Steuern des Flugs des Flugzeugs (1),
wobei, in dem Schritt des Ausführens einer modellprädiktiven Regelung,
ein Sollwert bezüglich der Relativposition auf Grundlage der ersten Deckverschiebung und der zweiten Deckverschiebung berechnet wird,
ein Schätzwert bezüglich der Relativposition auf Grundlage der Relativposition, einer Relativgeschwindigkeit zwischen dem Flugzeug (1) und dem Ziellandepunkt (2), eines Fluglagewinkels des Flugzeugs (1) und einer Winkelgeschwindigkeit des Fluglagewinkels berechnet wird, und
die Stellgröße derart berechnet wird, dass der Schätzwert der Sollwert ist.

## Revendications

1. Système de commande de position d'aéronef, qui amène une position de l'aéronef (1) à suivre un mouvement d'un point d'atterrissage cible (2) causé par un mouvement de navire, le système comprenant :
une unité de traitement (51), d'estimation du déplacement de pont, configurée pour estimer un premier déplacement du pont du point d'atterrissage cible (2), sur la base d'une accélération corrigée de l'attitude obtenue en corrigeant une accélération de l'aéronef (1) et une position relative entre l'aéronef (1) et le point d'atterrissage cible (2) ;
une unité de traitement (52), de prédiction du déplacement du pont, configurée pour prédire un deuxième déplacement du pont du point d'atterrissage cible (2), sur la base du premier déplacement estimé du pont ;
une unité de traitement (53), de filtrage, configurée pour mettre en œuvre un traitement de filtrage sur chaque déplacement parmi le premier déplacement du pont et le deuxième déplacement du pont prédit par l'unité de traitement (52) de prédiction du déplacement du pont ; et
une unité (54) de commande prédictive par modèle, configurée pour exécuter une commande prédictive par modèle de telle sorte que la position relative soit sensiblement nulle, sur la base du premier déplacement estimé du pont après traitement de filtrage et du deuxième déplacement du pont dans le futur après traitement de filtrage, et délivrer en sortie un degré de commande pour commander le vol de l'aéronef (1),
dans lequel l'unité (54) de commande prédictive par modèle est configurée pour :
calculer une valeur cible concernant la position relative sur la base du premier déplacement du pont et du deuxième déplacement du pont,
calculer une valeur estimée concernant la position relative sur la base de la position relative, d'une vitesse relative entre l'aéronef (1) et le point d'atterrissage cible (2), d'un angle d'attitude de l'aéronef (1), et d'une vitesse angulaire de l'angle d'attitude, et
calculer le degré de commande de telle sorte que la valeur estimée soit la valeur cible.

2. Système de commande de position d'aéronef selon la revendication 1,
dans lequel l'unité de traitement (53) de filtrage inclut
un filtre passe-haut (68), présentant une constante de temps prédéterminée, dans lequel le premier déplacement du pont est entré,
un gain (69), dans lequel est introduit le premier déplacement du pont délivré en sortie par le filtre passe-haut (68),
un filtre passe-haut (68), présentant une constante de temps prédéterminée, dans lequel le deuxième déplacement du pont est entré, et
un gain (69), dans lequel est introduit le deuxième déplacement du pont délivré en sortie par le filtre passe-haut (68).

3. Aéronef (1), comprenant :
le système de commande de position d'aéronef selon la revendication 1 ou la revendication 2 ; et
une unité (36) de commande de vol, configurée pour commander le vol sur la base du degré de commande délivré en sortie par le système de commande de position (100).

4. Procédé de commande de position d'aéronef pour amener une position de l'aéronef (1) à suivre un mouvement d'un point d'atterrissage cible (2) causé par un mouvement de navire, le procédé comprenant :
une étape consistant à estimer un premier déplacement du pont du point d'atterrissage cible (2), sur la base d'une accélération corrigée de l'attitude obtenue en corrigeant une accélération de l'aéronef (1) et une position relative entre l'aéronef (1) et le point d'atterrissage cible (2) ;
une étape consistant à prédire un deuxième déplacement du pont du point d'atterrissage cible (2), sur la base du premier déplacement estimé de pont ;
une étape consistant à mettre en œuvre un traitement de filtrage sur chaque déplacement parmi le premier déplacement du pont et le deuxième déplacement prédit du pont ; et
une étape consistant à exécuter une commande prédictive par modèle, de telle sorte que la position relative soit sensiblement nulle, sur la base du premier déplacement estimé du pont et du deuxième déplacement du pont dans le futur après traitement de filtrage, et à délivrer en sortie un degré de commande pour commander le vol de l'aéronef (1),
dans lequel, dans l'étape consistant à exécuter une commande prédictive par modèle,
il est opéré un calcul d'une valeur cible concernant la position relative sur la base du premier déplacement du pont et du deuxième déplacement du pont,
il est opéré un calcul d'une valeur estimée concernant la position relative sur la base de la position relative, d'une vitesse relative entre l'aéronef (1) et le point d'atterrissage cible (2), d'un angle d'attitude de l'aéronef (1), et d'une vitesse angulaire de l'angle d'attitude, et
il est opéré un calcul du degré de commande de telle sorte que la valeur estimée soit la valeur cible.
